# EUROPEAN PATENT SPECIFICATION

(11) **EP 4 413 783 B1**
(45) Date of publication and mention of the grant of the patent: **02.12.2026**
(21) Application number: 22801100.3
(22) Date of filing: 10.10.2022
(51) Int. Cl.: H04W 36/24, H04W 36/08, H04W 36/00, H04W 84/06

(54) **TECHNIQUE FOR MOBILITY BETWEEN TERRESTRIAL AND NON-TERRESTRIAL NETWORKS**
VERFAHREN ZUR MOBILITÄT ZWISCHEN TERRESTRISCHEN UND NICHTTERRESTRISCHEN NETZWERKEN
TECHNIQUE PERMETTANT UNE MOBILITÉ ENTRE DES RÉSEAUX TERRESTRE ET NON TERRESTRE

(30) Priority: 08.10.2021 US 202163253974 P
(43) Date of publication of application: 14.08.2024
(73) Proprietor: Telefonaktiebolaget LM Ericsson (publ), 164 83 Stockholm (SE)
(72) Inventor: LIBERG, Olof, 122 37 ENSKEDE (SE); YAVUZ, Emre, 112 52 STOCKHOLM (SE); MÄÄTTÄNEN, Helka-Liina, 02360 ESPOO (FI); EULER, Sebastian, 743 35 STORVRETA (SE); LIN, Xingqin, SAN JOSÈ, CA 95132 (US)
(74) Representative: Ericsson
(86) International application number: PCT/EP2022/078158
(87) International publication number: WO 2023/057655

(56) References cited:
- EP-A1- 3 800 936
- US-A1- 2020 178 135
- ERICSSON: "[Pre115-e][103][NTN] Summary of AI 8.10.3.3 - CHO and NTN -TN mobility", vol. RAN WG2, no. Electronic; 20210809 - 20210813, 16 August 2021 (2021-08-16), XP052043070, Retrieved from the Internet <URL:https://ftp.3gpp.org/tsg_ran/WG2_RL2/TSGR2_115-e/Inbox/R2-2109025.zip R2-2109025 Feature summary for AI 8.10.3.3.docx> [retrieved on 20210816]
- TURKCELL ET AL: "Service continuity between NTN and TN", vol. RAN WG2, no. e-Meeting; 20210809 - 20210827, 5 August 2021 (2021-08-05), XP052032460, Retrieved from the Internet <URL:https://ftp.3gpp.org/tsg_ran/WG2_RL2/TSGR2_115-e/Docs/R2-2108100.zip R2-2108100.docx> [retrieved on 20210805]
- "3rd Generation Partnership Project; Technical Specification Group Radio Access Network; Solutions for NR to support non-terrestrial networks (NTN) (Release 16)", no. V16.1.0, 30 June 2021 (2021-06-30), pages 1 - 140, XP052029957, Retrieved from the Internet <URL:https://ftp.3gpp.org/Specs/archive/38_series/38.821/38821-g10.zip 38821-g10.doc> [retrieved on 20210630]
- XIAOMI: "Further discussion on measurement requirements for NR NTN", vol. RAN WG4, no. Electronic meeting; 20210816 - 20210827, 6 August 2021 (2021-08-06), XP052036159, Retrieved from the Internet <URL:https://ftp.3gpp.org/tsg_ran/WG4_Radio/TSGR4_100-e/Docs/R4-2112423.zip R4-2112423 Further dicussion on mobility requirements for NR NTN.docx> [retrieved on 20210806]

## Description

### Technical Field

The present disclosure relates to a technique for mobility of radio devices between terrestrial and non-terrestrial networks. More specifically, methods and devices are provided for supporting mobility of a radio device between a terrestrial network and a non-terrestrial network.

### Background

The Third Generation Partnership Project (3GPP) specified in 3GPP Release 8 the Evolved Packet System (EPS). EPS is based on a radio access network (RAN) according to 3GPP Long-Term Evolution (LTE) and a core network (CN) according to 3GPP Evolved Packet Core (EPC). It was originally intended to provide voice and mobile broadband (MBB) services but has continuously evolved to broaden its functionality. Since 3GPP Release 13, narrowband Internet of Things (NB-loT) and LTE for machine-type communication (MTC or LTE-M) are part of the 3GPP specifications for LTE and provide connectivity to massive machine type communications (mMTC) services.

In 3GPP Release 15, the first release of a fifth generation (5G) system (5GS) was specified. This is a new generation's radio access technology (RAT) intended to serve use cases such as enhanced mobile broadband (eMBB), ultra-reliable and low latency communication (URLLC), and mMTC. The 5G RAT includes a New Radio (NR) access stratum (AS) interface and a 5G Core Network (5GC). The physical and higher layers of NR are reusing parts of the LTE specification, and to that add components, e.g., for use cases beyond LTE. One such component is the introduction of a sophisticated framework for beam forming and beam management to extend the support of the 3GPP technologies to a frequency range going beyond 6 GHz.

In Release 15, 3GPP started the work to prepare NR for operation in a non-terrestrial network (NTN). The work was conducted within the study item "NR to support Non-Terrestrial Networks", e.g., according to 3GPP document RP-193234. In Release 16, the work to prepare NR for operation in an NTN network continued with the study item "Solutions for NR to support Non-Terrestrial Network". In parallel the interest to adapt NB-loT and LTE-M for operation in NTN is growing. As a consequence, 3GPP Release 17 contains work items both on NR NTN and on NB-IoT and LTE-M support for NTN.

EP3800936 A1 discloses servicing a user terminal (UT) via a first network having a first coverage area; receiving, from the UT via the first network, a measurement report for a second network having a second coverage area based on a measurement configuration of the second network; sending, to the UT via the first network, a handover order for obtaining service from the second network; and establishing, via a second network RAN (radio access network), a service for the UT via the second network per the handover order. In the method, the first network may include either a terrestrial network (TN) or a non-terrestrial network (NTN), the second network may include other of the TN or the NTN, and the TN and the NTN are RF networks.

US2020178135 A1 discloses a method performed by a terminal in a non-terrestrial network comprising transmitting a measurement report including measurement results for neighbor cells to a serving satellite base station; receiving, from the serving satellite base station, connection configuration information for at least one target base station candidate and information on an activation time when the connection configuration information for the at least one target base station candidate is activated; and performing a handover to a first target base station candidate among the at least one target base station candidate based on information received from the at least one target base station candidate at the activation time.

3GPP draft document R2-2109025 from the same applicant, titled "[Pre115-e][103][NTN] Summary of AI 8.10.3.3 - CHO and NTN -TN mobility aspects only" discloses aspects of conditional handover (HO) for NTN.

3GPP draft document R2-2108100 titled "Service continuity between NTN and TN" discloses a discussion about triggers of TN-NTN mobility.

However, for a radio device that is handed over from a terrestrial 3GPP network (TN) to connect to a 3GPP NTN, there currently exists limited support for achieving service continuity. This may result in a degraded end user performance.

### Summary

Accordingly, there is a need for a technique that supports mobility between a terrestrial network and a non-terrestrial network.

It is the object of the invention to overcome exemplary problems described above. This object is achieved by the independent claims. Advantageous embodiments are described in the dependent claims and by the following description.

### Brief Description of the Drawings

Further details of embodiments of the technique are described with reference to the enclosed drawings, wherein:
- Fig. 1: shows a schematic block diagram of an embodiment of a device for supporting mobility of a radio device between a TN and an NTN, which may be implementable at the radio device;
- Fig. 2: shows a schematic block diagram of an embodiment of a device for supporting mobility of a radio device between a TN and an NTN, which may be implementable at the TN;

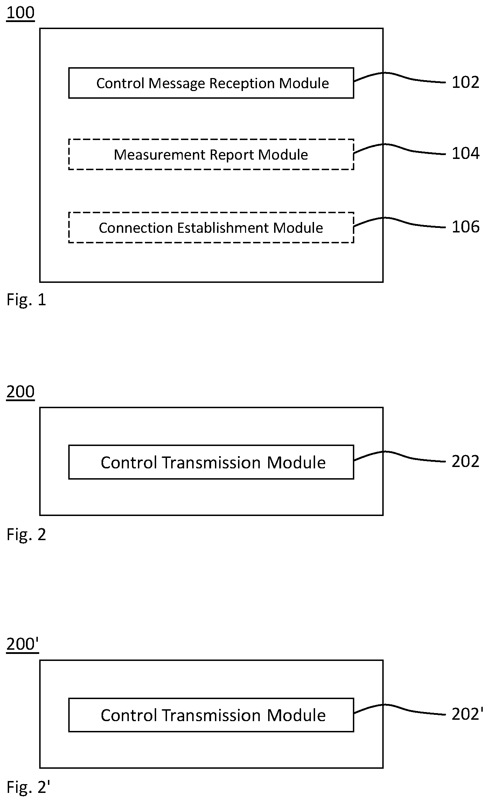

- Fig. 2': shows a schematic block diagram of an embodiment of a device for supporting mobility of a radio device between a TN and an NTN, which may be implementable at the NTN;

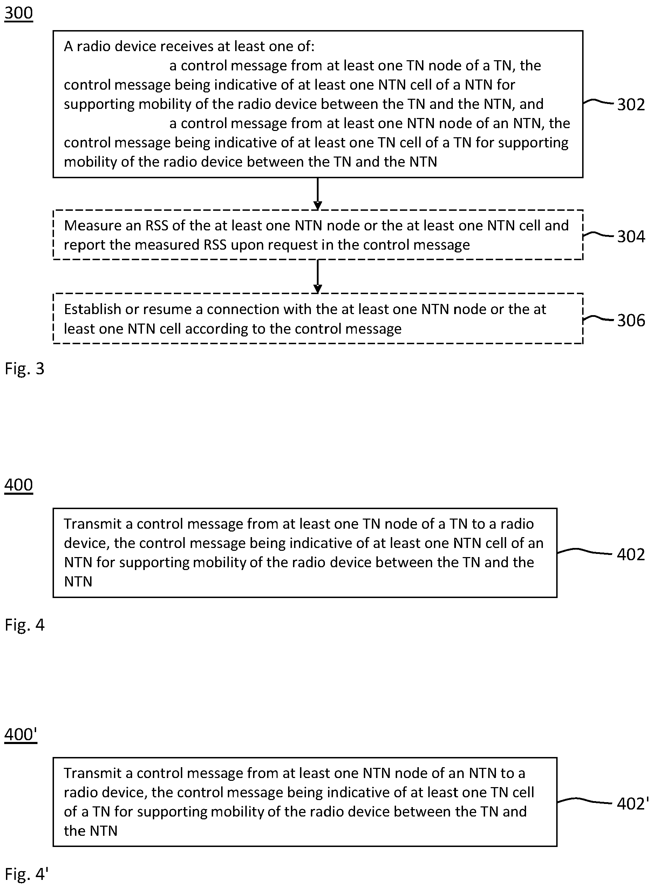

- Fig. 3: shows a flowchart for a method of supporting mobility of a radio device between a TN and an NTN, which method may be implementable by the device of Fig. 1;
- Fig. 4: shows a flowchart for a method of supporting mobility of a radio device between a TN and an NTN, which method may be implementable by the device of Fig. 2;
- Fig. 4': shows a flowchart for a method of supporting mobility of a radio device between a TN and an NTN, which method may be implementable by the device of Fig. 3;

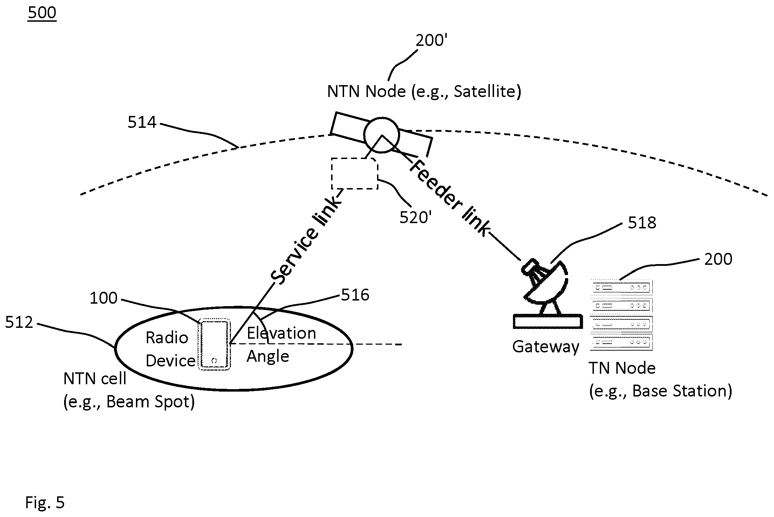

- Fig. 5: schematically illustrates an example of an NTN comprising embodiments of the devices of Figs. 1, 2, and 2' for performing the methods of Figs. 3, 4, and 4', respectively;

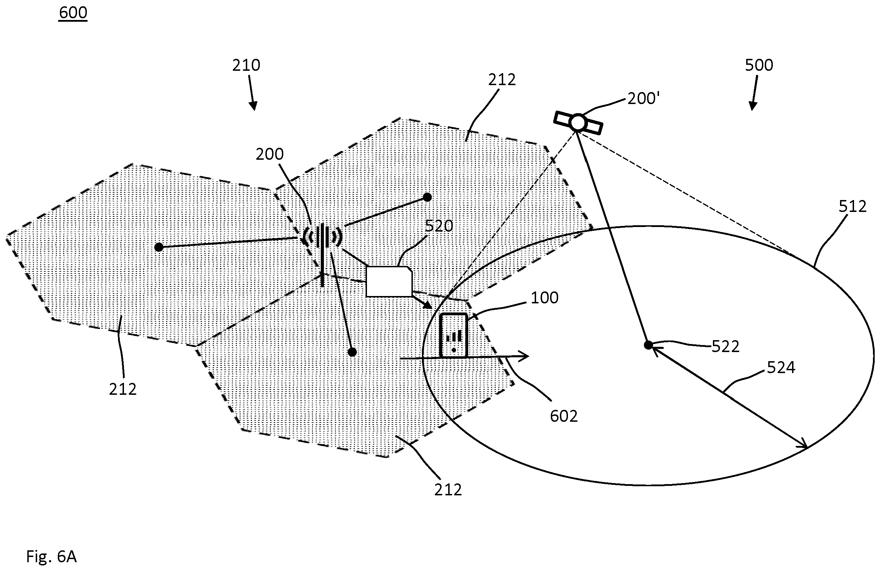

- Fig. 6A: schematically illustrates an example of a RAN comprising embodiments of the devices of Figs. 1 and 2 for performing the methods of Figs. 3 and 4, respectively;

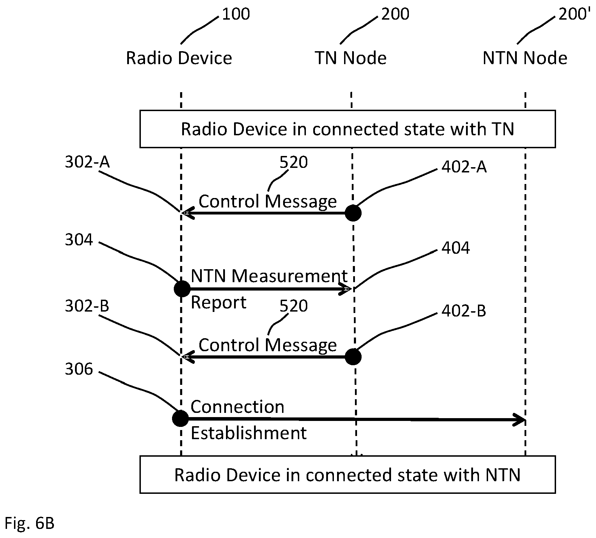

- Fig. 6B: schematically illustrates a signaling diagram resulting from embodiments of the devices of Figs. 1 and 2 performing the methods of Figs. 3 and 4, respectively, in radio communication;

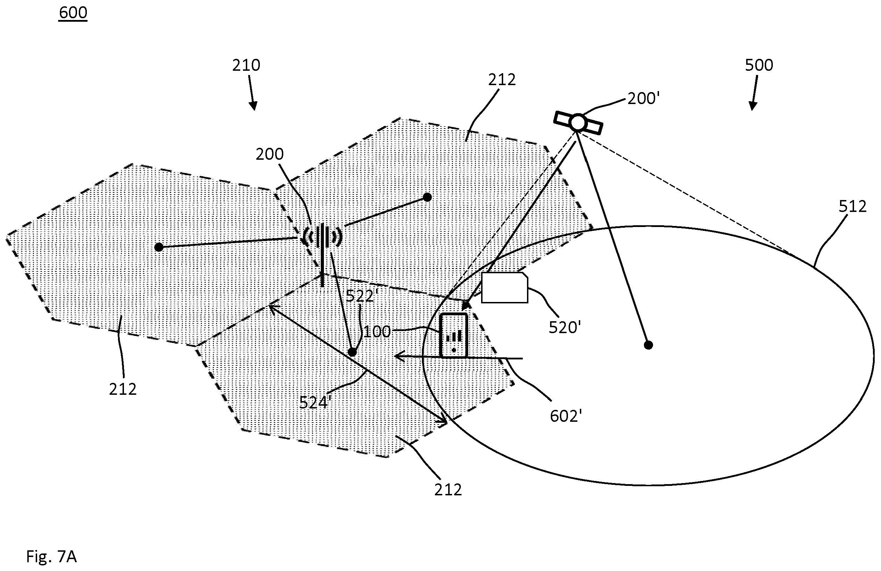

- Fig. 7A: schematically illustrates an example of a RAN comprising embodiments of the devices of Figs. 1 and 2' for performing the methods of Figs. 3 and 4', respectively;

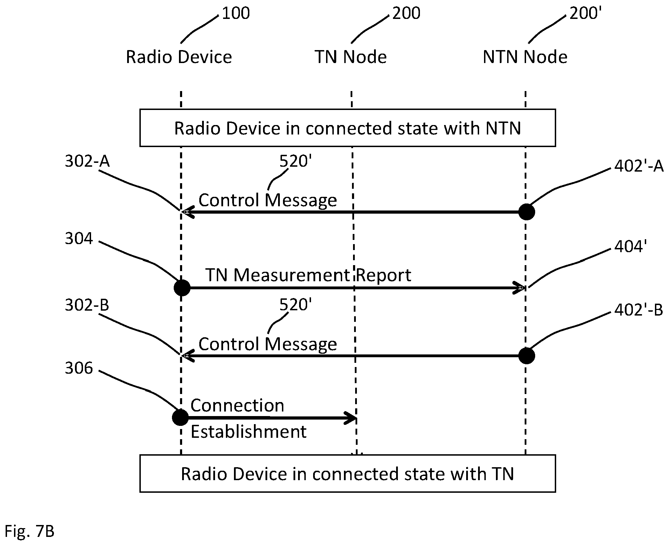

- Fig. 7B: schematically illustrates a signaling diagram resulting from embodiments of the devices of Figs. 1 and 2' performing the methods of Figs. 3 and 4', respectively, in radio communication;

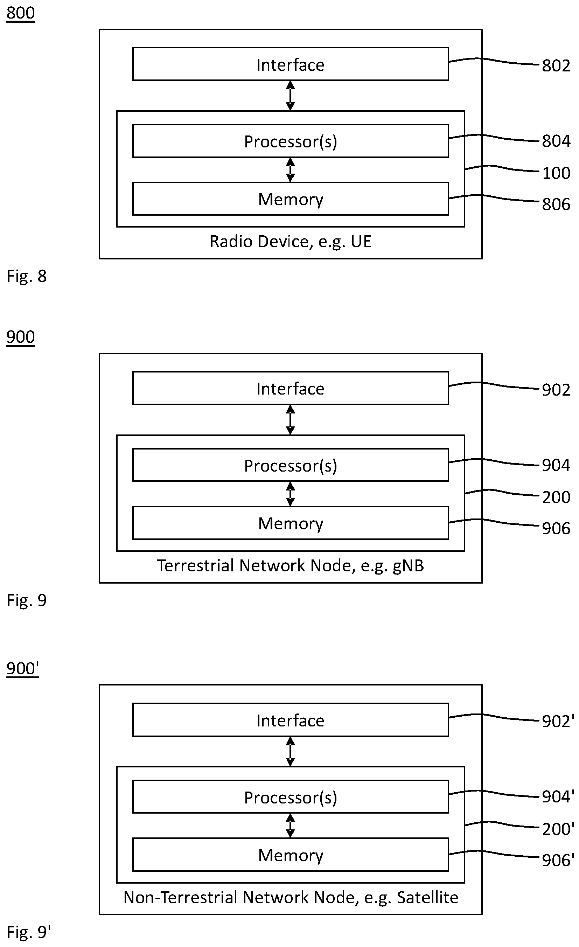

- Fig. 8: shows a schematic block diagram of a radio device embodying the device of Fig. 1;
- Fig. 9: shows a schematic block diagram of a TN node embodying the device of Fig. 2;
- Fig. 9': shows a schematic block diagram of an NTN node embodying the device of Fig. 2';

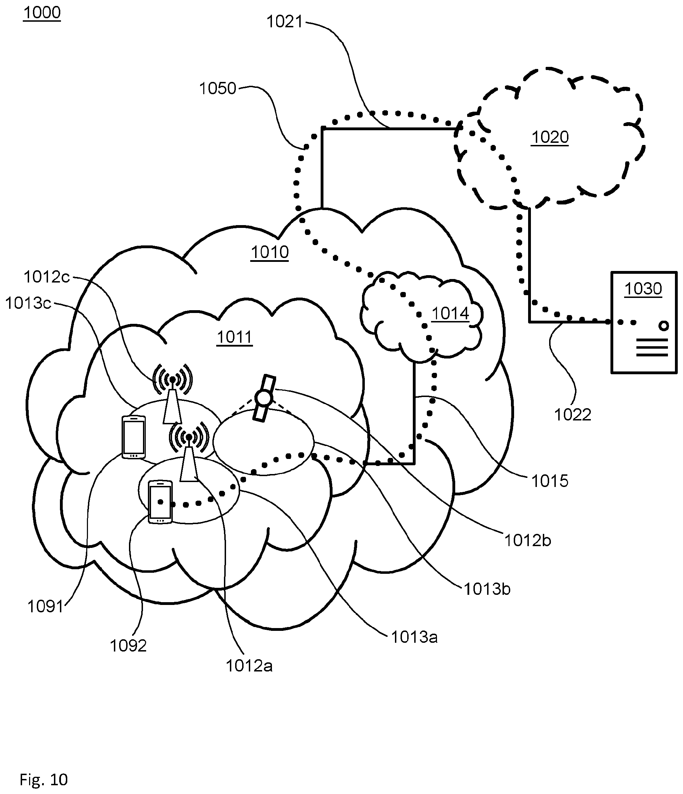

- Fig. 10: schematically illustrates an example telecommunication network connected via an intermediate network to a host computer;

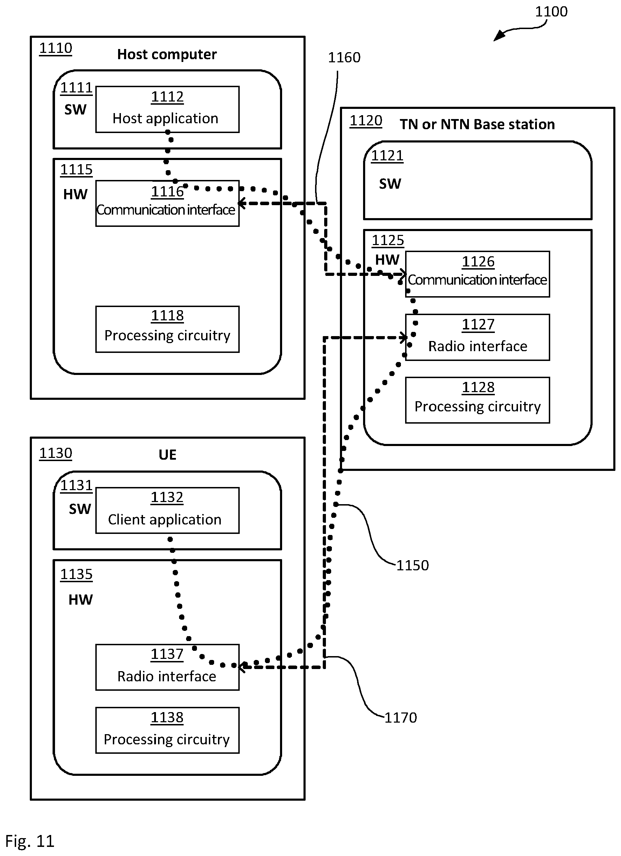

- Fig. 11: shows a generalized block diagram of a host computer communicating via
- a: base station or radio device functioning as a gateway with a user equipment over a partially wireless connection; and

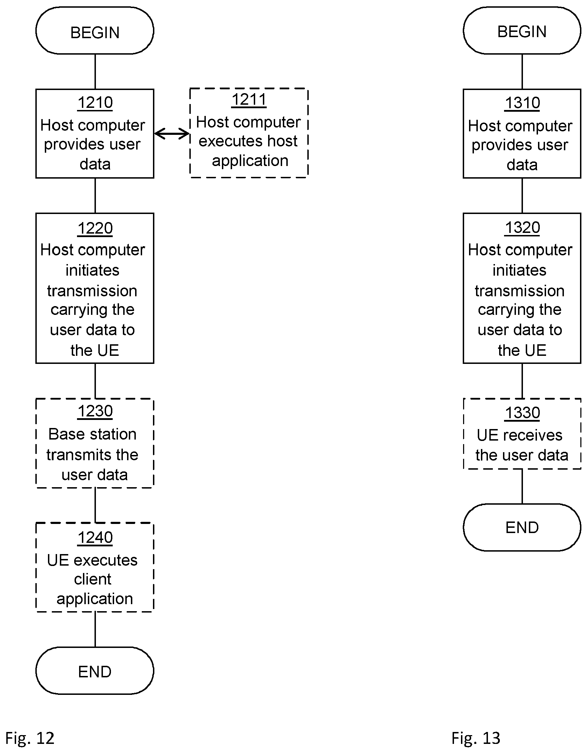

- Figs. 12 and 13: show flowcharts for methods implemented in a communication system including a host computer, a base station or radio device functioning as a gateway and a user equipment.

### Detailed Description

In the following description, for purposes of explanation and not limitation, specific details are set forth, such as a specific network environment in order to provide a thorough understanding of the technique disclosed herein. It will be apparent to one skilled in the art that the technique may be practiced in other embodiments that depart from these specific details. Moreover, while the following embodiments are primarily described for a New Radio (NR) or 5G implementation, it is readily apparent that the technique described herein may also be implemented for any other radio communication technique, including a Wireless Local Area Network (WLAN) implementation according to the standard family IEEE 802.11, 3GPP LTE (e.g., LTE-Advanced or a related radio access technique such as MulteFire), for Bluetooth according to the Bluetooth Special Interest Group (SIG), particularly Bluetooth Low Energy, Bluetooth Mesh Networking and Bluetooth broadcasting, for Z-Wave according to the Z-Wave Alliance or for ZigBee based on IEEE 802.15.4.

Moreover, those skilled in the art will appreciate that the functions, steps, units and modules explained herein may be implemented using software functioning in conjunction with a programmed microprocessor, an Application Specific Integrated Circuit (ASIC), a Field Programmable Gate Array (FPGA), a Digital Signal Processor (DSP) or a general purpose computer, e.g., including an Advanced RISC Machine (ARM). It will also be appreciated that, while the following embodiments are primarily described in context with methods and devices, the invention may also be embodied in a computer program product as well as in a system comprising at least one computer processor and memory coupled to the at least one processor, wherein the memory is encoded with one or more programs that may perform the functions and steps or implement the units and modules disclosed herein.

Fig. 1 schematically illustrates a block diagram of an embodiment of a device for supporting mobility of a radio device between a terrestrial network (TN) and a non-terrestrial network (NTN) and/or according to the first device aspect. The device is generically referred to by reference sign 100.

The device 100 comprises a control message reception module 102 that receives at least one control message.

At least one control message may be received from at least one (e.g., a) TN node of the TN at the radio device. Latter control message may be indicative of at least one NTN cell of the NTN for supporting the mobility of the radio device between the TN and the NTN, e.g., from the TN the NTN.

Alternatively or in addition, at least one control message may be received from at least one (e.g., a) NTN node of the NTN at the radio device. The latter control message may be indicative of at least one TN cell of the TN for supporting the mobility of the radio device between the TN and the NTN, e.g., from the NTN to the TN.

Optionally, the device 100 comprises a measurement report module 104 that measures a radio signal strength (RSS) of the at least one NTN node and/or the at least one NTN cell, and/or that reports the measured RSS to the TN or the NTN, e.g., upon request in the control message.

Alternatively or in addition, the device 100 comprises a connection establishment module that establishes or resumes a connection with the at least one NTN node and/or the at least one NTN cell and/or the at least one TN node and/or the at least one TN cell according to the control message.

Any of the modules of the device 100 may be implemented by units configured to provide the corresponding functionality.

The device 100 may also be referred to as, or may be embodied by, the radio device (or briefly: UE).

The radio device 100 and the at least one TN node may be in direct radio communication, e.g., at least when receiving the control message and prior to the establishing or resuming of the connection. The radio device 100 and the at least one NTN node may be in direct radio communication, e.g., as a result or after the establishing or resuming of the connection.

Alternatively or in addition, the radio device 100 and the at least one NTN node may be in direct radio communication, e.g., at least when receiving the control message and prior to the establishing or resuming of the connection. The radio device 100 and the at least one TN node may be in direct radio communication, e.g., as a result or after the establishing or resuming of the connection.

The at least one TN node may be embodied by below device 200. The at least one NTN node may be embodied by further below device 200'.

Fig. 2 schematically illustrates a block diagram of an embodiment of a device for supporting mobility of a radio device between a terrestrial network (TN) and a non-terrestrial network (NTN) and/or according to the second device aspect. The device is generically referred to by reference sign 200.

The device 200 comprises a control transmission module 202 that transmits a control message, e.g., as described in the context of the first and/or second (e.g., method or device) aspect.

Any of the modules of the device 200 may be implemented by units configured to provide the corresponding functionality.

The device 200 may also be referred to as, or may be embodied by, the TN node (or briefly: gNB).

Fig. 2' schematically illustrates a block diagram of an embodiment of a device for supporting mobility of a radio device between a terrestrial network (TN) and a non-terrestrial network (NTN) and/or according to the third device aspect. The device is generically referred to by reference sign 200'.

The device 200' comprises a control transmission module 202' that transmits a control message, e.g., as described in the context of the first and/or third (e.g., method or device) aspect.

Any of the modules of the device 200 may be implemented by units configured to provide the corresponding functionality.

The device 200' may also be referred to as, or may be embodied by, the NTN node (or briefly: satellite or HAP).

Fig. 3 shows an example flowchart for a method 300 of performing an embodiment of the first method aspect.

In a step 302, a radio device receives at least one of
- a control message from at least one TN node of the TN at the radio device, the control message being indicative of at least one NTN cell of the NTN for supporting the mobility of the radio device between the TN and the NTN, and
- a control message from at least one NTN node of the NTN at the radio device, the control message being indicative of at least one TN cell of the TN for supporting the mobility of the radio device between the TN and the NTN.

The method 300 may be performed by the device 100. For example, the modules 102, 104, and 106 may perform the steps 302, 304, and 306, respectively.

Fig. 4 shows an example flowchart for a method 400 of performing an embodiment of the second method aspect.

In a step 402, a or at least one TN node transmits a control message to the radio device. The control message is indicative of at least one NTN cell of the NTN for supporting the mobility of the radio device between the TN and the NTN.

The method 400 may be performed by the device 200. For example, the modules 202 may perform the step 402.

Fig. 4' shows an example flowchart for a method 400' of performing an embodiment of the third method aspect.

In a step 402', a or at least one NTN node transmits a control message to the radio device. The control message is indicative of at least one TN cell of the TN for supporting the mobility of the radio device between the TN and the NTN.

The method 400' may be performed by the device 200'. For example, the modules 202 may perform the step 402.

In any aspect, the device 100 may be a radio device. The TN node 200 may be a terrestrial base station. The NTN node 200' may be a non-terrestrial base station (e.g., a satellite or a HAP).

Herein, any radio device may be a mobile or portable station and/or any radio device wirelessly connectable to a base station or RAN (e.g., the TN and/or the NTN). For example, the radio device may be a user equipment (UE), a device for machine-type communication (MTC) or a device for (e.g., narrowband) Internet of Things (IoT). Two or more radio devices may be configured to wirelessly connect to each other, e.g., in an *ad hoc* radio network or via a 3GPP SL connection. Furthermore, any base station may be a station providing radio access, may be part of a radio access network (RAN) and/or may be a node connected to the RAN for controlling the radio access. For example, the base station may be an access point, for example a Wi-Fi access point.

Herein, whenever referring to noise or a signal-to-noise ratio (SNR), a corresponding step, feature or effect is also disclosed for noise and/or interference or a signal-to-interference-and-noise ratio (SINR).

Fig. 5 shows an example architecture of a satellite network with bent pipe transponders as an embodiment of the NTN 500. The depicted elevation angle 516 of the service link is important as it impacts the distance between the satellite as an embodiment of the NTN node 200' and the radio device 100, and the velocity of the satellite 200' relative to the radio device 100.

The NTN 500 (e.g., according to 3GPP) may comprise at least one of satellite communication and communications using high-altitude platforms (HAPs) as examples of the NTN nodes 200'. In this section we focus on satellite communication, but the provided description is readily applied to at least one HAPs 200' and a HAP network as the NTN 500.

A satellite radio access network as the NTN 500 may comprise at least one of the following components:
- at least one satellite as the at least one NTN node 200', which may also be referred to as a space-borne platform;
- an earth-based gateway 518 that connects the satellite 200' to a base station 200 and/or a core network, e.g., depending on the choice of architecture;
- a feeder link, i.e., a radio link between the gateway 518 and the satellite 200'; and
- an access link, i.e., a radio link between the satellite 200' and the radio device 100.

Depending on an orbit altitude (i.e., height), the satellite 200' may be categorized as low earth orbit (LEO), medium earth orbit (MEO), or geostationary earth orbit (GEO) satellite. LEO may comprise heights ranging from 250 km to 1,500 km, e.g., with orbital periods ranging from 90 minutes to 120 minutes. MEO may comprise heights ranging from 5,000 km to 25,000 km, e.g., with orbital periods ranging from 3 hours to 15 hours. GEO may comprise a height at about 35,786 km and/or an orbital period of 24 hours.

A communication satellite typically generates several beams over a given area (i.e., the coverage area). The footprint of a beam is usually in an elliptic shape, which may be considered as a TN cell 512. The footprint of a beam may also be referred to as a beam spot (also: spotbeam). The footprint of a beam may move over the earth surface with the satellite movement or may be earth-fixed with some beam pointing mechanism used by the satellite to compensate for its motion. A size 524 of a beam spot depends on the system design, which may range from tens of kilometers to a few thousands of kilometers.

Fig. 5 schematically illustrates an example architecture of an embodiment of the NTN 500 comprising a satellite network, optionally with bent pipe transponders.

The satellite orbit is determined based on ephemeris data. 3GPP has agreed that ephemeris data of a serving satellite 200' should be provided to the radio device 100 (e.g., UE), for example to assist with pointing a directional antenna (or an antenna beam) towards the satellite 200'. Alternatively or in addition, the radio device 100 knowing its own position (e.g. based on a global navigation satellite system, GNSS) may use the ephemeris data to calculate and/or correct a Timing Advance (TA) and/or a Doppler shift used when establishing a link to the satellite (e.g., when transmitting a random access preamble or performing a random access procedure).

In any aspect, an example includes a scenario in which the radio device 100 (e.g., a UE) needs to be handed over to the NTN 500 when the radio device 100 is leaving coverage of the TN 210 (i.e., a coverage area of the TN and/or a TN cell of the TN), e.g., as illustrated in Fig. 6A.

Before the radio device 100 (e.g., a UE) can establish and/or resume the connection to a target cell 512 in the NTN 500 (i.e., an NTN cell 512 of the NTN 500), the radio device 100 may need to determine a position of the satellite 200' the NTN coverage (i.e., a satellite 200' embodying the NTN node) and/or its own position. For example, the radio device may determine, based on the control message 520, a timing advance (TA) pre-compensation prior to triggering a random access (RA) procedure (e.g., for transmitting a RA preamble) to the target cell 512. Without the control message 520, this would be a time-consuming task that deteriorates the experienced end user performance, e.g., if the radio device 100 is connecting to the NTN 500 for a first time after powering-on the radio device 100.

In any aspect, another example includes a scenario in which the radio device 100 (e.g., a UE) performs radio resource management (RRM) measurements 304 on a (e.g., neighboring) NTN (briefly: NTN measurements), e.g., on the at least one NTN cell 512 neighboring the at least one TN cell 212 serving the radio device 100. Such RRM measurements 304 are power consuming. For the radio device 100 (e.g., a UE) experiencing coverage by both the TN 210 and the NTN 500, it may be wasteful to perform such NTN measurements if the TN signal strength is adequate. Embodiments of the technique may limit and/or control the NTN measurements according to the control message 520.

Fig. 6A and Fig. 7A schematically illustrate an embodiment of a radio device (e.g., a UE) that moves from coverage of an embodiment of a TN 210 to coverage of an embodiment of an NTN 500, and *vice versa,* respectively.

The TN 210 and the NTN 500 may be segments of a random access network (RAN) 600.

In below detailed embodiments, the radio device 100 is referred to as a UE for brevity and not limitation. Furthermore, any one of the below detailed embodiments may be implemented as such or in combination with any of the above described embodiments and/or any of the embodiments in the list of embodiments.

In a first detailed embodiment, a terrestrial network (TN) node 200 signals information (e.g., in the control message 520) concerning a non-terrestrial network (NTN) to a UE 100. The control message may support a handover of the UE 100 to the NTN 500. The information in the control message 520 comprises assistance information, e.g., ephemeris, of a satellite 200' providing the NTN coverage. Based on knowing the satellite ephemeris, the UE 100 may point its directional antenna, or antenna beam, toward the satellite 200' for expediting the handover from the TN 210 to the NTN 500.

In a first implementation of the first detailed embodiment, the information (e.g., the control message 520), e.g., ephemeris, may be provided via system information (SI) broadcast in a source cell (e.g., a TN cell 212) that is a (e.g., next) neighbor cell to the NTN cell 512 in the NTN 500. This means that the information could be acquired by all UEs in the TN cell, e.g., regardless of whether the respective UE is likely for them to be handed over to an NTN cell 512 in the NTN 500. In a variant, the TN cell 212 may broadcast a reference point (e.g., the NTN cell center 522) and/or distance (e.g., a range or diameter 524 or some other expression), which indicates to the UE 100 when to start preparing for measuring and/or for accessing the NTN 500, e.g., by determining and/or following a satellite location (i.e., position) in order to determine a suitable time for a (e.g., initial) transmission of a random access (RA) preamble (RAP).

In a second implementation of the first detailed embodiment, the information (e.g., the control message 520) may be provided as part of a handover command to a UE 100 which is to be handed over to an NTN cell 512 in the NTN 500. In this case, only the UE 100 that is to be handed over to an NTN cell 512 in the NTN 500 receives the information. Currently, it is possible to provide SIB1 and SIB2 as part of the handover command, but if, e.g., ephemeris information of the satellite providing the NTN coverage is specified to be provided in another SIB, that particular SIB is provided as part of the handover command. It is also possible that the information can be provided via an explicit set of field parameters rather than the or a system information block (SIB).

In a third implementation of the first detailed embodiment, the TN 210 broadcasts (e.g., as a first instance of the control message 520), e.g., in SIB, only an indication that NTN-related information is available. The UE 100 may then request the information to be transmitted in a second instance of the control message 520, e.g. via dedicated signaling (e.g., RRC signaling). The background here can be that a UE 100 - even though technically NTN-capable - might still not want to be handed over to an NTN, for example because the handover might entail additional costs for a user of the UE 100. In this way, the TN 210 can be able to know which UEs 100 should be handed over to the NTN and which should not.

In a fourth implementation of the first detailed embodiment, when an NTN-capable UE 100 (i.e., an embodiment of the UE 100) is powered on, the UE 100 may first search for a TN cell 212 that signals information concerning an NTN 500 (e.g., the control message 520), and/or decodes the information (e.g., the control message 520) transmitted from the TN cell 512 about the NTN 500, and/or then utilize the assistance information (e.g., the control message 520) to search for an NTN cell. Alternatively, the NTN-capable UE 100 (i.e., an embodiment of the UE 100) may first search for an NTN cell 512 for a period of time. If the UE 100 cannot find an NTN cell 512 after the period of time, the UE 100 may receive the information (e.g., the control message 520) transmitted from a TN cell 512 about the NTN 500, and/or then utilize the assistance information (e.g., the control message 520) to search for an NTN cell 512.

In a fifth implementation of the first detailed embodiment, a UE 100 signals to the network that it is capable of TN-NTN dual connectivity (DC). The UE 100 (e.g., in response to the signaling of the capable of TN-NTN DC) is configured (e.g., by the TN node 200) with a Master cell group that comprises one or more of TN cells 212 (e.g., denoted as TN MCG) and a Secondary cell group that comprises one or more NTN cells 512 (e.g., denoted as NTN SCG). The TN 210 transmits system information (SI) (e.g., as an example of the control message 520) of NTN SCG through signaling in the TN MCG.

Fig. 6B schematically illustrates a signaling diagram for a handover of the UE 100 from the TN 210 to the NTN 500, e.g., according to the first detailed embodiment. The step 302 may comprise a sub-step 302-A of receiving a first instance of the control message 520 (e.g., from TN node 200) that triggers or configures (e.g., conditionally triggers) the UE 100 to start measuring 304 the RSS of the at least one NTN cell 512. Optionally, the measured RSS is reported to the TN node 200. Depending on the measured RSS, e.g., in response to a second instance of the control message 520 received in response to the measurement report, the UE initiates 306 an access procedure for establishing or resuming a connection with the at least one NTN node 200'.

Steps 402-A, 404, and 402-B of the method 400 correspond to the steps 302-A, 304, and 302-B of the method 300.

In second detailed embodiment, which may be implemented alone or in combination with the first detailed embodiment, an NTN node 200' signals information (e.g., the control message 520') concerning a TN 210 to a UE 100. Fig. 7A schematically illustrates a RAN 600 comprising embodiments of the TN 210 and the NTN 500 and an embodiment of the UE 100 to be handed over from the NTN 500 to the TN 210.

For example, in the signaling diagram of Fig. 7B, steps 402'-A, 404', and 402'-B of the method 400' correspond to the steps 302-A, 304, and 302-B of the method 300.

The control message 520' is to support a handover (HO) of the UE from NTN 500 to the TN 210. This information, i.e., the control message 520', comprises assistance information, e.g., the cell ID and/or carrier frequency of the TN cell 212 (e.g., as the target cell). Based on knowing the information about the TN 210 (e.g., the TN cell 212), the UE 100 may start to measure the TN 210 (e.g., the TN cell 212) for preparing the handover from the NTN 500 to the TN 210.

For a UE 100 supporting NTN features, i.e. an embodiment of the UE 100, it may be possible to give or be given in the control command 520 (e.g., by the TN 210) a conditional HO (CHO) command. The CHO command may be a handover command that is subject to a condition. The condition may comprise a location threshold for a location of the UE 100 (e.g., relative to the NTN cell 512 and/or the NTN node 200') and/or an RSS TN threshold for the RSS of the TN 210 and/or an RSS NTN threshold for the RSS of the NTN and/or a comparison between an RSS of the TN and an RSS of the NTN 500, e.g., for performing the HO.

In another detailed embodiment or a variant of the second detailed embodiment, the TN node 200 may give the UE 100 an enhanced CHO command to the NTN 500 which has a second location threshold which guides UE to when the UE is close to the actual location threshold to perform the HO and thus when to start measuring 304 the NTN cell 512. This can be beneficial as the NTN cell 512 may have a RSRP level coverage that is very wide and the UE 100 may be able to detect and measure the NTN cell 512 well ahead of time when UE 100 is actually supposed to HO to the NTN 500. From system perspective (e.g., the second device aspect), as the TN 210 may have a better capability (e.g., greater data rate compared to the NTN 500) to serve the UE 100, the UE 100 may access the NTN 500 only when TN coverage is not adequate.

In another embodiment or a variant of the first detailed embodiment, a terrestrial network (TN) node 200 signals information (e.g., an instance of the control message 520) that comprises an almanac for a GNSS or any navigation satellite system. The almanac may comprise a coarse orbit and/or status information as to navigation satellites (or satellites 200') in a constellation, and/or the relevant ionospheric model and/or time-related information of the GNSS or any navigation satellite system, e.g., so that the handover between the TN 210 and the NTN 500 can be performed with better service continuity.

The UE 100 may consider the information (e.g., the control message 520) provided as an implicit indication for turning on an GNSS receiver for the GNSS and/or speeding up a warm-up phase by reducing the time required to acquire, for example, the orbit of the at least one satellite 200' and/or status information of the navigation satellites in the constellation of the GNSS or any navigation satellite system or the satellites 200'. Another benefit may comprise a reduction of power consumption of the UE 100.

In a first implementation (e.g., of the first and/or second detailed embodiment), such information (e.g., the control message 520 or 520') may be provided via system information (SI) broadcast in the source cell that is neighbor to the NTN cell 512 (e.g., the target or the serving cell) in the NTN 500. This may mean that the information would be acquired by all UEs 100 in the TN cell 212 or the NTN cell 512 regardless of whether it is likely for them to be handed over to an TN cell 212 in the TN 210 or to an NTN cell 512 in the NTN 500.

In a second implementation (e.g., of the first and/or second detailed embodiment), the information (e.g., the control information 520 or 520') can be provided as part of the handover command to a UE 100 which is to be handed over to a cell in the TN 210 or in the NTN 500. In this case, only the UE 100 that is to be handed over to a cell in the TN 210 or in the NTN 510 receives the information.

In a third dependent embodiment, the information can be provided to the UE via dedicated signaling considering the possibility of a handover in the near future based on the measurement reports provided by the UE 100 (e.g., in the step 304) so that there is enough time for the UE 100 to turn on a receiver for the navigation system in advance prior to receiving the handover command.

The triggering for providing the information to the UE can be based on, for example, a first time the UE 100 reports after a configured event is fulfilled, or the frequency of reporting, or a threshold with respect to a particular measurement is reached. This may be up to network implementation or a request from the UE 100 may be provided to the TN 210.

Fig. 8 shows a schematic block diagram for an embodiment of the device 100. The device 100 comprises processing circuitry, e.g., one or more processors 804 for performing the method 300 and memory 806 coupled to the processors 804. For example, the memory 806 may be encoded with instructions that implement at least one of the modules 102, 104 and 106.

The one or more processors 804 may be a combination of one or more of a microprocessor, controller, microcontroller, central processing unit, digital signal processor, application specific integrated circuit, field programmable gate array, or any other suitable computing device, resource, or combination of hardware, microcode and/or encoded logic operable to provide, either alone or in conjunction with other components of the device 100, such as the memory 806, transmitter and/or radio device functionality. For example, the one or more processors 804 may execute instructions stored in the memory 806. Such functionality may include providing various features and steps discussed herein, including any of the benefits disclosed herein. The expression "the device being operative to perform an action" may denote the device 100 being configured to perform the action.

As schematically illustrated in Fig. 8, the device 100 may be embodied by a radio device 800, e.g., functioning as a transmitter and/or a UE. The radio device 800 comprises a radio interface 802 coupled to the device 100 for radio communication with one or more network nodes (i.e., base stations), e.g., functioning as a TN node 200 and/or an NTN node 200'.

Fig. 9 shows a schematic block diagram for an embodiment of the device 200. The device 200 comprises processing circuitry, e.g., one or more processors 904 for performing the method 400 and memory 906 coupled to the processors 904. For example, the memory 906 may be encoded with instructions that implement the module 202.

The one or more processors 904 may be a combination of one or more of a microprocessor, controller, microcontroller, central processing unit, digital signal processor, application specific integrated circuit, field programmable gate array, or any other suitable computing device, resource, or combination of hardware, microcode and/or encoded logic operable to provide, either alone or in conjunction with other components of the device 200, such as the memory 906, receiver and/or network node functionality. For example, the one or more processors 904 may execute instructions stored in the memory 906. Such functionality may include providing various features and steps discussed herein, including any of the benefits disclosed herein. The expression "the device being operative to perform an action" may denote the device 200 being configured to perform the action.

As schematically illustrated in Fig. 9, the device 200 may be embodied by a terrestrial network (TN) node 900, e.g., functioning as a receiving base station and/or a gNB. The TN node 900 comprises a radio interface 902 coupled to the device 200 for radio communication with one or more radio devices, e.g., functioning as a UE.

Fig. 9' shows a schematic block diagram for an embodiment of the device 200'. The device 200' comprises processing circuitry, e.g., one or more processors 904' for performing the method 400' and memory 906' coupled to the processors 904'. For example, the memory 906' may be encoded with instructions that implement the module 202'.

The one or more processors 904' may be a combination of one or more of a microprocessor, controller, microcontroller, central processing unit, digital signal processor, application specific integrated circuit, field programmable gate array, or any other suitable computing device, resource, or combination of hardware, microcode and/or encoded logic operable to provide, either alone or in conjunction with other components of the device 200', such as the memory 906', receiver and/or network node functionality. For example, the one or more processors 904' may execute instructions stored in the memory 906'. Such functionality may include providing various features and steps discussed herein, including any of the benefits disclosed herein. The expression "the device being operative to perform an action" may denote the device 200' being configured to perform the action.

As schematically illustrated in Fig. 9', the device 200' may be embodied by a non-terrestrial network (NTN) node 900', e.g., functioning as a receiving base station and/or a satellite and/or HAP. The NTN node 900' comprises a radio interface 902' coupled to the device 200' for radio communication with one or more radio devices, e.g., functioning as a UE.

With reference to Fig. 10, in accordance with an embodiment, a communication system 1000 includes a telecommunication network 1010, such as a 3GPP-type cellular network, which comprises an access network 1011, such as a radio access network, and a core network 1014. The access network 1011 comprises a plurality of base stations 1012a, 1012b, 1012c, such as NBs, eNBs, gNBs or other types of wireless access points, each defining a corresponding coverage area 1013a, 1013b, 1013c. Each base station 1012a, 1012b, 1012c is connectable to the core network 1014 over a wired or wireless connection 1015. A first user equipment (UE) 1091 located in coverage area 1013c is configured to wirelessly connect to, or be paged by, the corresponding base station 1012c. A second UE 1092 in coverage area 1013a is wirelessly connectable to the corresponding base station 1012a. While a plurality of UEs 1091, 1092 are illustrated in this example, the disclosed embodiments are equally applicable to a situation where a sole UE is in the coverage area or where a sole UE is connecting to the corresponding base station 1012.

Any of the base stations 1012 and the UEs 1091, 1092 may embody the device 100.

The telecommunication network 1010 is itself connected to a host computer 1030, which may be embodied in the hardware and/or software of a standalone server, a cloud-implemented server, a distributed server or as processing resources in a server farm. The host computer 1030 may be under the ownership or control of a service provider, or may be operated by the service provider or on behalf of the service provider. The connections 1021, 1022 between the telecommunication network 1010 and the host computer 1030 may extend directly from the core network 1014 to the host computer 1030 or may go via an optional intermediate network 1020. The intermediate network 1020 may be one of, or a combination of more than one of, a public, private or hosted network; the intermediate network 1020, if any, may be a backbone network or the Internet; in particular, the intermediate network 1020 may comprise two or more sub-networks (not shown).

The communication system 1000 of Fig. 10 as a whole enables connectivity between one of the connected UEs 1091, 1092 and the host computer 1030. The connectivity may be described as an over-the-top (OTT) connection 1050. The host computer 1030 and the connected UEs 1091, 1092 are configured to communicate data and/or signaling via the OTT connection 1050, using the access network 1011, the core network 1014, any intermediate network 1020 and possible further infrastructure (not shown) as intermediaries. The OTT connection 1050 may be transparent in the sense that the participating communication devices through which the OTT connection 1050 passes are unaware of routing of uplink and downlink communications. For example, a base station 1012 need not be informed about the past routing of an incoming downlink communication with data originating from a host computer 1030 to be forwarded (e.g., handed over) to a connected UE 1091. Similarly, the base station 1012 need not be aware of the future routing of an outgoing uplink communication originating from the UE 1091 towards the host computer 1030.

By virtue of the method 300 being performed by any one of the UEs 1091 or 1092 as the radio device 100 and/or the method 400 being performed by any one of the base stations 1012a and 1012c as TN node 200 and/or the method 400' being performed by the base station 1012b as NTN node 200', the performance or range of the OTT connection 1050 can be improved, e.g., in terms of increased throughput and/or reduced latency. More specifically, the host computer 1030 may indicate to the RAN 600 or the TN 210 or the NTN 500 or the TN node 200 or the NTN node 200', or the radio device 100 (e.g., on an application layer) a QoS of the traffic or any other explicit or implicit trigger for performing the technique.

Example implementations, in accordance with an embodiment of the UE, base station and host computer discussed in the preceding paragraphs, will now be described with reference to Fig. 11. In a communication system 1100, a host computer 1110 comprises hardware 1115 including a communication interface 1116 configured to set up and maintain a wired or wireless connection with an interface of a different communication device of the communication system 1100. The host computer 1110 further comprises processing circuitry 1118, which may have storage and/or processing capabilities. In particular, the processing circuitry 1118 may comprise one or more programmable processors, application-specific integrated circuits, field programmable gate arrays or combinations of these (not shown) adapted to execute instructions. The host computer 1110 further comprises software 1111, which is stored in or accessible by the host computer 1110 and executable by the processing circuitry 1118. The software 1111 includes a host application 1112. The host application 1112 may be operable to provide a service to a remote user, such as a UE 1130 connecting via an OTT connection 1150 terminating at the UE 1130 and the host computer 1110. In providing the service to the remote user, the host application 1112 may provide user data, which is transmitted using the OTT connection 1150. The user data may depend on the location of the UE 1130. The user data may comprise auxiliary information or precision advertisements (also: ads) delivered to the UE 1130. The location may be reported by the UE 1130 to the host computer, e.g., using the OTT connection 1150, and/or by the base station 1120, e.g., using a connection 1160.

The communication system 1100 further includes a base station 1120 provided in a telecommunication system and comprising hardware 1125 enabling it to communicate with the host computer 1110 and with the UE 1130. The hardware 1125 may include a communication interface 1126 for setting up and maintaining a wired or wireless connection with an interface of a different communication device of the communication system 1100, as well as a radio interface 1127 for setting up and maintaining at least a wireless connection 1170 with a UE 1130 located in a coverage area (not shown in Fig. 11) served by the base station 1120. The communication interface 1126 may be configured to facilitate a connection 1160 to the host computer 1110. The connection 1160 may be direct, or it may pass through a core network (not shown in Fig. 11) of the telecommunication system and/or through one or more intermediate networks outside the telecommunication system. In the embodiment shown, the hardware 1125 of the base station 1120 further includes processing circuitry 1128, which may comprise one or more programmable processors, application-specific integrated circuits, field programmable gate arrays or combinations of these (not shown) adapted to execute instructions. The base station 1120 further has software 1121 stored internally or accessible via an external connection.

The communication system 1100 further includes the UE 1130 already referred to. Its hardware 1135 may include a radio interface 1137 configured to set up and maintain a wireless connection 1170 with a base station serving a coverage area in which the UE 1130 is currently located. The hardware 1135 of the UE 1130 further includes processing circuitry 1138, which may comprise one or more programmable processors, application-specific integrated circuits, field programmable gate arrays or combinations of these (not shown) adapted to execute instructions. The UE 1130 further comprises software 1131, which is stored in or accessible by the UE 1130 and executable by the processing circuitry 1138. The software 1131 includes a client application 1132. The client application 1132 may be operable to provide a service to a human or non-human user via the UE 1130, with the support of the host computer 1110. In the host computer 1110, an executing host application 1112 may communicate with the executing client application 1132 via the OTT connection 1150 terminating at the UE 1130 and the host computer 1110. In providing the service to the user, the client application 1132 may receive request data from the host application 1112 and provide user data in response to the request data. The OTT connection 1150 may transfer both the request data and the user data. The client application 1132 may interact with the user to generate the user data that it provides.

It is noted that the host computer 1110, base station 1120 and UE 1130 illustrated in Fig. 11 may be identical to the host computer 1030, one of the base stations 1012a, 1012b, 1012c and one of the UEs 1091, 1092 of Fig. 10, respectively. This is to say, the inner workings of these entities may be as shown in Fig. 11, and, independently, the surrounding network topology may be that of Fig. 10.

In Fig. 11, the OTT connection 1150 has been drawn abstractly to illustrate the communication between the host computer 1110 and the UE 1130 via the base station 1120, without explicit reference to any intermediary devices and the precise routing of messages via these devices. Network infrastructure may determine the routing, which it may be configured to hide from the UE 1130 or from the service provider operating the host computer 1110, or both. While the OTT connection 1150 is active, the network infrastructure may further take decisions by which it dynamically changes the routing (e.g., on the basis of load balancing consideration or reconfiguration of the network).

The wireless connection 1170 between the UE 1130 and the base station 1120 is in accordance with the teachings of the embodiments described throughout this disclosure. One or more of the various embodiments improve the performance of OTT services provided to the UE 1130 using the OTT connection 1150, in which the wireless connection 1170 forms the last segment. More precisely, the teachings of these embodiments may reduce the latency and improve the data rate and thereby provide benefits such as better responsiveness and improved QoS.

A measurement procedure may be provided for the purpose of monitoring data rate, latency, QoS and other factors on which the one or more embodiments improve. There may further be an optional network functionality for reconfiguring the OTT connection 1150 between the host computer 1110 and UE 1130, in response to variations in the measurement results. The measurement procedure and/or the network functionality for reconfiguring the OTT connection 1150 may be implemented in the software 1111 of the host computer 1110 or in the software 1131 of the UE 1130, or both. In embodiments, sensors (not shown) may be deployed in or in association with communication devices through which the OTT connection 1150 passes; the sensors may participate in the measurement procedure by supplying values of the monitored quantities exemplified above, or supplying values of other physical quantities from which software 1111, 1131 may compute or estimate the monitored quantities. The reconfiguring of the OTT connection 1150 may include message format, retransmission settings, preferred routing etc.; the reconfiguring need not affect the base station 1120, and it may be unknown or imperceptible to the base station 1120. Such procedures and functionalities may be known and practiced in the art. In certain embodiments, measurements may involve proprietary UE signaling facilitating the host computer's 1110 measurements of throughput, propagation times, latency and the like. The measurements may be implemented in that the software 1111, 1131 causes messages to be transmitted, in particular empty or "dummy" messages, using the OTT connection 1150 while it monitors propagation times, errors etc.

Fig. 12 is a flowchart illustrating a method implemented in a communication system, in accordance with one embodiment. The communication system includes a host computer, a base station and a UE which may be those described with reference to Figs. 10 and 11. For simplicity of the present disclosure, only drawing references to Fig. 12 will be included in this paragraph. In a first step 1210 of the method, the host computer provides user data. In an optional sub-step 1211 of the first step 1210, the host computer provides the user data by executing a host application. In a second step 1220, the host computer initiates a transmission carrying the user data to the UE. In an optional third step 1230, the base station transmits to the UE the user data which was carried in the transmission that the host computer initiated, in accordance with the teachings of the embodiments described throughout this disclosure. In an optional fourth step 1240, the UE executes a client application associated with the host application executed by the host computer.

Fig. 13 is a flowchart illustrating a method implemented in a communication system, in accordance with one embodiment. The communication system includes a host computer, a base station and a UE which may be those described with reference to Figs. 10 and 11. For simplicity of the present disclosure, only drawing references to Fig. 13 will be included in this paragraph. In a first step 1310 of the method, the host computer provides user data. In an optional sub-step (not shown) the host computer provides the user data by executing a host application. In a second step 1320, the host computer initiates a transmission carrying the user data to the UE. The transmission may pass via the base station, in accordance with the teachings of the embodiments described throughout this disclosure. In an optional third step 1330, the UE receives the user data carried in the transmission.

As has become apparent from above description, at least some embodiments of the technique enable mobility (e.g., a handover) from a TN to an NTN (e.g., from connectivity provided by the TN to connectivity provided by the NTN) and/or from an NTN to a TN (e.g., from connectivity provided by the NTN to connectivity provided by the TN) more efficiently. For example, latency and/or handover time and/or power consumption for the handover may be reduced.

Many advantages of the present invention will be fully understood from the foregoing description, and it will be apparent that various changes may be made in the form, construction and arrangement of the units and devices without departing from the scope of the invention and/or without sacrificing all of its advantages. Since the invention can be varied in many ways, it will be recognized that the invention should be limited only by the scope of the following claims.

## Claims

1. A method (300) of supporting mobility (602; 602') of a radio device (100; 800; 1091; 1092; 1130) between a terrestrial network, TN (210), and a non-terrestrial network, NTN (500), the method (300) performed by the radio device (100; 800; 1091; 1092; 1130) comprising:
receiving (302) a control message (520) from at least one TN node (200; 900; 1012a; 1012c; 1120) of the TN (210) at the radio device (100; 800; 1091; 1092; 1130);
**characterized in that** the control message (520) is indicative of at least one NTN cell (512) of the NTN (500) for supporting the mobility (602) of the radio device (100; 800; 1091; 1092; 1130) between the TN (210) and the NTN (500);
wherein the control message is further indicative of a coverage area covered by the at least one NTN node, and at least one of: a reference point of the coverage area, a center of the coverage area, and a size of the coverage area, which indicates when to start preparing for measuring and/or for accessing the NTN.

2. The method (300) of claim 1, wherein the control message (520) is indicative of ephemeris data (514) of one or each of the at least one NTN node (200'; 900'; 1012b; 1120), and wherein the radio device, based on the control message performs pointing a directional antenna of the radio device to the at least one NTN node or applying a precoder to a plurality of antennas of the radio device for pointing a radio beam to the at least one NTN node.

3. The method (300) of claim 1 or 2, wherein one of the at least one NTN cell is a target cell of the mobility; and
wherein at least one TN cell of the TN is a source cell of the mobility.

4. The method (300) of any one of claims 1 to 3, wherein the at least one TN node (200; 900; 1012a; 1012c; 1120) of the TN (210) provides radio access in at least one TN cell (212), wherein at least one NTN node (200'; 900'; 1012b; 1120) of the NTN (500) provides radio access in the at least one NTN cell (512), and
wherein the control message (520) is indicative of at least one of:
a position of one or each of the at least one NTN node (200'; 900'; 1012b; 1120);
a velocity of one or each of the at least one NTN node (200'; 900'; 1012b; 1120);
a trajectory (514) of one or each of the at least one NTN node (200'; 900'; 1012b; 1120);
a cell identifier, cell ID, and/or a carrier frequency of one or each of the at least one NTN node (200'; 900'; 1012b; 1120) or one or each of the at least one NTN cell (512);
a handover command for a handover of the radio device (100; 800; 1091; 1092; 1130) from the at least one TN node (200; 900; 1012a; 1012c; 1120) or the at least one TN cell (212) to the at least one NTN node (200'; 900'; 1012b; 1120) or the at least one NTN cell (512);
a position of the radio device (100; 800; 1091; 1092; 1130) relative to the at least one NTN node (200'; 900'; 1012b; 1120);
an elevation angle (516) and/or azimuth angle for an uplink transmission from the radio device (100; 800; 1091; 1092; 1130) to the at least one NTN node (200'; 900'; 1012b; 1120) and/or a downlink reception from the at least one NTN node (200'; 900'; 1012b; 1120) at the radio device (100; 800; 1091; 1092; 1130);
a timing advance, TA, or a pre-compensation of the TA, for an uplink transmission from the radio device (100; 800; 1091; 1092; 1130) to the at least one NTN node (200'; 900'; 1012b; 1120); and
a precoder for a beamformed transmission from the radio device (100; 800; 1091; 1092; 1130) to the at least one NTN node (200'; 900'; 1012b; 1120).

5. The method (300) of any one of claims 1 to 4, wherein the at least one TN cell (212) is serving the radio device (100; 800; 1091; 1092; 1130), and
wherein the at least one TN node (200; 900; 1012a; 1012c; 1120) is a serving node of the radio device (100; 800; 1091; 1092; 1130); and
wherein the at least one TN cell (212) and the at least one NTN cell (512) are neighboring cells or overlapping cells.

6. The method (300) of any one of claims 1 to 5, further comprising or initiating at least one of:
measuring (304) a radio signal strength, RSS, of the at least one NTN node (200'; 900'; 1012b; 1120) or the at least one NTN cell (512) and reporting the measured RSS upon request in the control message (520);
transmitting a random access preamble from the radio device (100; 800; 1091; 1092; 1130) to the at least one NTN node (200'; 900'; 1012b; 1120) or the at least one NTN cell (512) according to the control message (520); and
performing a handover of the radio device (100; 800; 1091; 1092; 1130) from the at least one TN node (200; 900; 1012a; 1012c; 1120) or the at least one TN cell (212) to the at least one NTN node (200'; 900'; 1012b; 1120) or the at least one NTN cell (512) according to the control message (520).

7. The method (300) of claim 6, wherein the radio device (100; 800; 1091; 1092; 1130) performs at least one of the steps of claim 6 upon fulfilment of one of the following conditions:
leaving the coverage area of the at least one TN cell;
entering the coverage area of the at least one NTN cell; and
measuring an RSS of the at least one NTN cell (512) that is equal to or greater than a predefined RSS NTN threshold.

8. The method (300) of any one of claims 1 to 7, wherein the control message (520) is broadcasted in system information, SI, of the at least one TN node (200; 900; 1012a; 1012c; 1120).

9. The method (300) of claim 8, wherein the SI is indicative of supporting the mobility of the radio device (100; 800; 1091; 1092; 1130) between the TN (210) and the NTN (500); and
transmitting a request based on the indication in the SI to the at least one TN node (200; 900; 1012a; 1012c; 1120), wherein the control message (520) is received (302) in response to the transmitted request.

10. The method (300) of any one of claim 1 to 9, further comprising or initiating:
searching for an NTN cell of the NTN (500) for a predefined time period; and
if no NTN cell of the NTN (500) is found during the predefined time period, transmitting a request to the at least one TN node (200; 900; 1012a; 1012c; 1120), wherein the control message (520) is received (302) in response to the transmitted request.

11. A method (400) of supporting mobility (602) of a radio device (100; 800; 1091; 1092; 1130) between a terrestrial network, TN (210), and a non-terrestrial network, NTN (500), the method (400) performed by at least one node of the TN comprising:
transmitting (402) a control message (520) to the radio device (100; 800; 1091; 1092; 1130), the control message (520) being indicative of:
at least one NTN cell (512) of the NTN (500) for supporting the mobility (602) of the radio device (100; 800; 1091; 1092; 1130) between the TN (210) and the NTN (500);
wherein the control message is further indicative of a coverage area covered by the at least one NTN node, and at least one of: a reference point of the coverage area, a center of the coverage area, and a size of the coverage area, which supports the radio device deciding to start preparing for measuring and/or for accessing the NTN.

12. A radio device (100; 800; 1091; 1092; 1130) for supporting mobility (602; 602') of the radio device (100; 800; 1091; 1092; 1130) between a terrestrial network, TN (210), and a non-terrestrial network, NTN (500), the radio device (100; 800; 1091; 1092; 1130) comprising memory operable to store instructions and processing circuitry operable to execute the instructions, such that the radio device (100; 800; 1091; 1092; 1130) is operable to perform any one of the steps of any one of claims 1 to 10.

13. A network node for supporting mobility of a radio device between a terrestrial network, TN, and a non-terrestrial network, NTN, the network node comprising memory operable to store instructions and processing circuitry operable to execute the instructions, such that the network node is operable to perform the steps of claim 11.

## Patentansprüche

1. Verfahren (300) zur Unterstützung von Mobilität (602; 602') einer Funkvorrichtung (100; 800; 1091; 1092; 1130) zwischen einem terrestrischen Netzwerk, TN, (210) und einem nicht-terrestrischen Netzwerk, NTN, (500), wobei das Verfahren (300) von der Funkvorrichtung (100; 800; 1091; 1092; 1130) durchgeführt wird und Folgendes umfasst:
Empfangen (302) einer Steuernachricht (520) von mindestens einem TN-Knoten (200; 900; 1012a; 1012c; 1120) des TN (210) an der Funkvorrichtung (100; 800; 1091; 1092; 1130);
**dadurch gekennzeichnet, dass** die Steuernachricht (520) mindestens eine NTN-Zelle (512) des NTN (500) zum Unterstützen der Mobilität (602) der Funkvorrichtung (100; 800; 1091; 1092; 1130) zwischen dem TN (210) und dem NTN (500) angibt;
wobei die Steuernachricht ferner ein Abdeckungsgebiet, das von dem mindestens einen NTN-Knoten abgedeckt wird, und mindestens eines von Folgenden angibt: einen Referenzpunkt des Abdeckungsgebiets, einen Mittelpunkt des Abdeckungsgebiets und eine Größe des Abdeckungsgebiets, was angibt, wann mit der Vorbereitung auf die Messung und/oder auf den Zugang zum NTN begonnen werden soll.

2. Verfahren (300) nach Anspruch 1, wobei die Steuernachricht (520) Ephemeridendaten (514) eines oder jedes des mindestens einen NTN-Knotens (200'; 900'; 1012b; 1120) angibt und wobei die Funkvorrichtung basierend auf der Steuernachricht Richten einer Richtantenne der Funkvorrichtung auf den mindestens einen NTN-Knoten oder Anwenden eines Vorcodierers auf eine Mehrzahl von Antennen der Funkvorrichtung zum Richten eines Funkstrahls auf den mindestens einen NTN-Knoten durchführt.

3. Verfahren (300) nach Anspruch 1 oder 2, wobei eine der mindestens einen NTN-Zelle eine Zielzelle der Mobilität ist; und
wobei mindestens eine TN-Zelle des TN eine Quellzelle der Mobilität ist.

4. Verfahren (300) nach einem der Ansprüche 1 bis 3, wobei der mindestens eine TN-Knoten (200; 900; 1012a; 1012c; 1120) des TN (210) Funkzugang in mindestens einer TN-Zelle (212) bereitstellt, wobei der mindestens eine NTN-Knoten (200'; 900'; 1012b; 1120) des NTN (500) Funkzugang in der mindestens einen NTN-Zelle (512) bereitstellt, und
wobei die Steuernachricht (520) mindestens eines von Folgenden angibt:
eine Position eines oder jedes des mindestens einen NTN-Knotens (200'; 900'; 1012b; 1120);
eine Geschwindigkeit eines oder jedes des mindestens einen NTN-Knotens (200'; 900'; 1012b; 1120);
eine Trajektorie (514) eines oder jedes des mindestens einen NTN-Knotens (200'; 900'; 1012b; 1120);
eine Zellkennung, Zell-ID, und/oder eine Trägerfrequenz eines oder jedes des mindestens einen NTN-Knotens (200'; 900'; 1012b; 1120) oder einer oder jeder der mindestens einen NTN-Zelle (512);
einen Übergabebefehl für eine Übergabe der Funkvorrichtung (100; 800; 1091; 1092; 1130) von dem mindestens einen TN-Knoten (200; 900; 1012a; 1012c; 1120) oder der mindestens einen TN-Zelle (212) an den mindestens einen NTN-Knoten (200'; 900'; 1012b; 1120) oder die mindestens eine NTN-Zelle (512);
eine Position der Funkvorrichtung (100; 800; 1091; 1092; 1130) relativ zu dem mindestens einen NTN-Knoten (200'; 900'; 1012b; 1120);
einen Elevationswinkel (516) und/oder einen Azimutwinkel für eine Uplink-Übertragung von der Funkvorrichtung (100; 800; 1091; 1092; 1130) an den mindestens einen NTN-Knoten (200'; 900'; 1012b; 1120) und/oder einen Downlink-Empfang von dem mindestens einen NTN-Knoten (200'; 900'; 1012b; 1120) an der Funkvorrichtung (100; 800; 1091; 1092; 1130);
eine Zeitvorverlegung, TA, oder eine Vorkompensation der TA für eine Uplink-Übertragung von der Funkvorrichtung (100; 800; 1091; 1092; 1130) an den mindestens einen NTN-Knoten (200'; 900'; 1012b; 1120); und
einen Vorcodierer für eine strahlgeformte Übertragung von der Funkvorrichtung (100; 800; 1091; 1092; 1130) an den mindestens einen NTN-Knoten (200'; 900'; 1012b; 1120).

5. Verfahren (300) nach einem der Ansprüche 1 bis 4, wobei die mindestens eine TN-Zelle (212) die Funkvorrichtung (100; 800; 1091; 1092; 1130) bedient und
wobei der mindestens eine TN-Knoten (200; 900; 1012a; 1012c; 1120) ein bedienender Knoten der Funkvorrichtung (100; 800; 1091; 1092; 1130) ist; und
wobei die mindestens eine TN-Zelle (212) und die mindestens eine NTN-Zelle (512) benachbarte Zellen oder überlappende Zellen sind.

6. Verfahren (300) nach einem der Ansprüche 1 bis 5, ferner umfassend oder initiierend mindestens eines von Folgendem:
Messen (304) einer Funksignalstärke, RSS, des mindestens einen NTN-Knotens (200'; 900'; 1012b; 1120) oder der mindestens einen NTN-Zelle (512) und Melden der gemessenen RSS bei Anforderung in der Steuernachricht (520);
Senden einer Direktzugriffspräambel von der Funkvorrichtung (100; 800; 1091; 1092; 1130) an den mindestens einen NTN-Knoten (200'; 900'; 1012b; 1120) oder die mindestens eine NTN-Zelle (512) gemäß der Steuernachricht (520); und
Durchführen einer Übergabe der Funkvorrichtung (100; 800; 1091; 1092; 1130) von dem mindestens einen TN-Knoten (200; 900; 1012a; 1012c; 1120) oder der mindestens einen TN-Zelle (212) an den mindestens einen NTN-Knoten (200'; 900'; 1012b; 1120) oder die mindestens eine NTN-Zelle (512) gemäß der Steuernachricht (520).

7. Verfahren (300) nach Anspruch 6, wobei die Funkvorrichtung (100; 800; 1091; 1092; 1130) mindestens einen der Schritte von Anspruch 6 bei Erfüllung einer der folgenden Bedingungen ausführt:
Verlassen des Abdeckungsgebiets der mindestens einen TN-Zelle;
Eintreten in das Abdeckungsgebiet der mindestens einen NTN-Zelle; und
Messen einer RSS der mindestens einen NTN-Zelle (512), die gleich oder größer als ein vordefinierter RSS-Schwellenwert des NTN ist.

8. Verfahren (300) nach einem der Ansprüche 1 bis 7, wobei die Steuernachricht (520) per Broadcast in Systeminformationen, SI, des mindestens einen TN-Knotens (200; 900; 1012a; 1012c; 1120) gesendet wird.

9. Verfahren (300) nach Anspruch 8, wobei die SI Unterstützung der Mobilität der Funkvorrichtung (100; 800; 1091; 1092; 1130) zwischen dem TN (210) und dem NTN (500) angeben; und
Senden einer Anforderung basierend auf der Angabe in den SI an den mindestens einen TN-Knoten (200; 900; 1012a; 1012c; 1120), wobei die Steuernachricht (520) in Reaktion auf die gesendete Anforderung empfangen wird (302).

10. Verfahren (300) nach einem der Ansprüche 1 bis 9, ferner umfassend oder initiierend:
Suchen nach einer NTN-Zelle des NTN (500) für einen vordefinierten Zeitraum; und,
falle während des vordefinierten Zeitraums keine NTN-Zelle des NTN (500) gefunden wird, Senden einer Anforderung an den mindestens einen TN-Knoten (200; 900; 1012a; 1012c; 1120), wobei die Steuernachricht (520) in Reaktion auf die gesendete Anforderung empfangen wird (302).

11. Verfahren (400) zur Unterstützung von Mobilität (602) einer Funkvorrichtung (100; 800; 1091; 1092; 1130) zwischen einem terrestrischen Netzwerk, TN, (210) und einem nicht-terrestrischen Netzwerk, NTN, (500), wobei das Verfahren (400) von mindestens einem Knoten des TN durchgeführt wird und Folgendes umfasst:
Senden (402) einer Steuernachricht (520) an die Funkvorrichtung (100; 800; 1091; 1092; 1130), wobei die Steuernachricht (520) Folgendes angibt:
mindestens eine NTN-Zelle (512) des NTN (500) zum Unterstützen der Mobilität (602) der Funkvorrichtung (100; 800; 1091; 1092; 1130) zwischen dem TN (210) und dem NTN (500);
wobei die Steuernachricht ferner einen Abdeckungsgebiet, das von dem mindestens einen NTN-Knoten abgedeckt wird, und mindestens eines von Folgenden angibt: einen Referenzpunkt des Abdeckungsgebiets, einen Mittelpunkt des Abdeckungsgebiets und eine Größe des Abdeckungsgebiets, was die Funkvorrichtung dabei unterstützt, zu entscheiden, mit der Vorbereitung auf die Messung und/oder auf den Zugang zum NTN zu beginnen.

12. Funkvorrichtung (100; 800; 1091; 1092; 1130) zum Unterstützen von Mobilität (602; 602') der Funkvorrichtung (100; 800; 1091; 1092; 1130) zwischen einem terrestrischen Netzwerk, TN, (210) und einem nicht-terrestrischen Netzwerk, NTN, (500), wobei die Funkvorrichtung (100; 800; 1091; 1092; 1130) Speicher, der zum Speichern von Anweisungen ausgelegt ist, und Verarbeitungsschaltungsanordnung umfasst, die zum Ausführen der Anweisungen ausgelegt ist, so dass die Funkvorrichtung (100; 800; 1091; 1092; 1130) zum Ausführen der Schritte nach einem der Ansprüche 1 bis 10 ausgelegt ist.

13. Netzwerkknoten zum Unterstützen von Mobilität einer Funkvorrichtung zwischen einem terrestrischen Netzwerk, TN, und einem nicht-terrestrischen Netzwerk, NTN, wobei der Netzwerkknoten Speicher, der zum Speichern von Anweisungen ausgelegt ist, und Verarbeitungsschaltungsanordnung umfasst, die zum Ausführen der Anweisungen ausgelegt ist, so dass der Netzwerkknoten zum Ausführen der Schritte nach einem Anspruch 11 ausgelegt ist.

## Revendications

1. Procédé (300) de prise en charge d'une mobilité (602 ; 602') d'un dispositif radio (100 ; 800 ; 1091 ; 1092 ; 1130) entre un réseau terrestre, TN (210), et un réseau non terrestre, NTN (500), le procédé (300) réalisé par le dispositif radio (100 ; 800 ; 1091 ; 1092 ; 1130) comprenant :
la réception (302) d'un message de commande (520) depuis au moins un nœud TN (200 ; 900 ; 1012a ; 1012c ; 1120) du TN (210) au niveau du dispositif radio (100 ; 800 ; 1091 ; 1092 ; 1130) ;
**caractérisé en ce que** le message de commande (520) indique au moins une cellule NTN (512) du NTN (500) pour prendre en charge la mobilité (602) du dispositif radio (100 ; 800 ; 1091 ; 1092 ; 1130) entre le TN (210) et le NTN (500) ;
dans lequel le message de commande indique en outre une zone de couverture couverte par l'au moins un nœud NTN, et au moins l'un parmi : un point de référence de la zone de couverture, un centre de la zone de couverture, et une taille de la zone de couverture, qui indique quand commencer à se préparer à la mesure du et/ou à l'accès au NTN.

2. Procédé (300) selon la revendication 1, dans lequel le message de commande (520) indique des données d'éphéméride (514) de l'un ou de chacun de l'au moins un nœud TN (200' ; 900' ; 1012b ; 1120), et dans lequel le dispositif radio, sur la base du message de commande, réalise le pointage d'une antenne directionnelle du dispositif radio vers l'au moins un nœud NTN ou l'application d'un précodeur à une pluralité d'antennes du dispositif radio pour le pointage d'un faisceau radio vers l'au moins un nœud NTN.

3. Procédé (300) selon la revendication 1 ou 2, dans lequel l'une de l'au moins une cellule NTN est une cellule cible de la mobilité ; et
dans lequel au moins une cellule TN du TN est une cellule source de la mobilité.

4. Procédé (300) selon l'une quelconque des revendications 1 à 3, dans lequel l'au moins un nœud TN (200 ; 900 ; 1012a ; 1012c ; 1120) du TN (210) fournit un accès radio dans au moins une cellule TN (212), dans lequel au moins un nœud NTN (200' ; 900' ; 1012b ; 1120) du NTN (500) fournit un accès radio dans l'au moins une cellule NTN (512), et
dans lequel le message de commande (520) indique au moins l'une parmi :
une position d'un ou de chacun de l'au moins un nœud NTN (200' ; 900' ; 1012b ; 1120) ;
une vitesse d'un ou de chacun de l'au moins un nœud NTN (200' ; 900' ; 1012b ; 1120) ;
une trajectoire (514) d'un ou de chacun de l'au moins un nœud NTN (200' ; 900' ; 1012b ; 1120) ;
un identifiant, ID, de cellule et/ou une fréquence porteuse d'un ou de chacun de l'au moins un nœud NTN (200' ; 900' ; 1012b ; 1120) ou d'une ou de chacune de l'au moins une cellule NTN (512) ;
une commande de transfert intercellulaire pour un transfert intercellulaire du dispositif radio (100 ; 800 ; 1091 ; 1092 ; 1130) de l'au moins un nœud TN (200 ; 900 ; 1012a ; 1012c ; 1120) ou de l'au moins une cellule TN (212) à l'au moins un nœud NTN (200' ; 900' ; 1012b ; 1120) ou à l'au moins une cellule NTN (512) ;
une position du dispositif radio (100 ; 800 ; 1091 ; 1092 ; 1130) par rapport à l'au moins un nœud NTN (200' ; 900' ; 1012b ; 1120) ;
un angle d'élévation (516) et/ou un angle d'azimut pour une transmission de liaison montante du dispositif radio (100 ; 800 ; 1091 ; 1092 ; 1130) à l'au moins un nœud NTN (200' ; 900' ; 1012b ; 1120) et/ou une réception de liaison descendante de l'au moins un nœud NTN (200' ; 900' ; 1012b ; 1120) au dispositif radio (100 ; 800 ; 1091 ; 1092 ; 1130) ;
une avance temporelle, TA, ou une pré-compensation de la TA, pour une transmission de liaison montante du dispositif radio (100 ; 800 ; 1091 ; 1092 ; 1130) à l'au moins un nœud NTN (200' ; 900' ; 1012b ; 1120) ; et
un précodeur pour une transmission formée en faisceau du dispositif radio (100 ; 800 ; 1091 ; 1092 ; 1130) à l'au moins un nœud NTN (200' ; 900' ; 1012b ; 1120).

5. Procédé (300) selon l'une quelconque des revendications 1 à 4, dans lequel l'au moins une cellule TN (212) dessert le dispositif radio (100 ; 800 ; 1091 ; 1092 ; 1130), et
dans lequel l'au moins un nœud TN (200 ; 900 ; 1012a ; 1012c ; 1120) est un nœud de desserte du dispositif radio (100 ; 800 ; 1091 ; 1092 ; 1130) ; et
dans lequel l'au moins une cellule TN (212) et l'au moins une cellule NTN (512) sont des cellules voisines ou des cellules se chevauchant.

6. Procédé (300) selon l'une quelconque des revendications 1 à 5, en outre comprenant ou initiant au moins l'une parmi :
la mesure (304) d'une force de signal radio, RSS, de l'au moins un nœud NTN (200' ; 900' ; 1012b ; 1120) ou de l'au moins une cellule NTN (512) et le rapport de la RSS mesurée à la demande dans le message de commande (520) ;
la transmission d'un préambule d'accès aléatoire du dispositif radio (100 ; 800 ; 1091 ; 1092 ; 1130) à l'au moins un nœud NTN (200' ; 900' ; 1012b ; 1120) ou à l'au moins une cellule NTN (512) selon le message de commande (520) ; et
la réalisation d'un transfert intercellulaire du dispositif radio (100 ; 800 ; 1091 ; 1092 ; 1130) de l'au moins un nœud TN (200 ; 900 ; 1012a ; 1012c ; 1120) ou de l'au moins une cellule TN (212) à l'au moins un nœud NTN (200' ; 900' ; 1012b ; 1120) ou à l'au moins une cellule NTN (512) selon le message de commande (520).

7. Procédé (300) selon la revendication 6, dans lequel le dispositif radio (100 ; 800 ; 1091 ; 1092 ; 1130) réalise au moins l'une des étapes selon la revendication 6 lorsque l'une des conditions suivantes est remplie :
la sortie de la zone de couverture de l'au moins une cellule TN ;
l'entrée dans la zone de couverture de l'au moins une cellule TN ; et
la mesure d'une RSS de l'au moins une cellule TN (512) qui est supérieure ou égale à un seuil RSS NTN prédéfini.

8. Procédé (300) selon l'une quelconque des revendications 1 à 7, dans lequel le message de commande (520) est diffusé dans des informations système, SI, de l'au moins un nœud TN (200 ; 900 ; 1012a ; 1012c ; 1120).

9. Procédé (300) selon la revendication 8, dans lequel les SI indiquent la prise en charge de la mobilité du dispositif radio (100 ; 800 ; 1091 ; 1092 ; 1130) entre le TN (210) et le NTN (500) ; et
la transmission d'une demande sur la base de l'indication dans les SI à l'au moins un nœud TN (200 ; 900 ; 1012a ; 1012c ; 1120), dans lequel le message de commande (520) est reçu (302) en réponse à la demande transmise.

10. Procédé (300) selon l'une quelconque des revendications 1 à 9, en outre comprenant ou initiant :
la recherche d'une cellule NTN du NTN (500) pendant une période de temps prédéfinie ; et
si aucune cellule NTN du NTN (500) n'est trouvée pendant la période de temps prédéfinie, la transmission d'une demande à l'au moins un nœud TN (200 ; 900 ; 1012a ; 1012c ; 1120), dans lequel le message de commande (520) est reçu (302) en réponse à la demande transmise.

11. Procédé (400) de prise en charge d'une mobilité (602) d'un dispositif radio (100 ; 800 ; 1091 ; 1092 ; 1130) entre un réseau terrestre, TN (210), et un réseau non terrestre, NTN (500), le procédé (400) réalisé par au moins un nœud du TN comprenant :
la transmission (402) d'un message de commande (520) au dispositif radio (100 ; 800 ; 1091 ; 1092 ; 1130), le message de commande (520) indiquant :
au moins une cellule NTN (512) du NTN (500) pour prendre en charge la mobilité (602) du dispositif radio (100 ; 800 ; 1091 ; 1092 ; 1130) entre le TN (210) et le NTN (500) ;
dans lequel le message de commande indique en outre une zone de couverture couverte par l'au moins un nœud NTN, et au moins l'un parmi : un point de référence de la zone de couverture, un centre de la zone de couverture, et une taille de la zone de couverture, qui prend en charge le dispositif radio décidant de commencer à se préparer à la mesure du et/ou à l'accès au NTN.

12. Dispositif radio (100 ; 800 ; 1091 ; 1092 ; 1130) pour prendre en charge une mobilité (602 ; 602') du dispositif radio (100 ; 800 ; 1091 ; 1092 ; 1130) entre un réseau terrestre, TN (210), et un réseau non terrestre, NTN (500), le dispositif radio (100 ; 800 ; 1091 ; 1092 ; 1130) comprenant une mémoire exploitable pour stocker des instructions et une circuiterie de traitement exploitable pour exécuter les instructions, de sorte que le dispositif radio (100 ; 800 ; 1091 ; 1092 ; 1130) soit exploitable pour réaliser l'une quelconque des étapes selon l'une quelconque des revendications 1 à 10.

13. Nœud de réseau pour prendre en charge une mobilité d'un dispositif radio entre un réseau terrestre, TN, et un réseau non terrestre, NTN, le nœud de réseau comprenant une mémoire exploitable pour stocker des instructions et une circuiterie de traitement exploitable pour exécuter les instructions, de sorte que le nœud de réseau soit exploitable pour réaliser les étapes selon la revendication 11.
